(19) Europäisches Patentamt
European Patent Office
Office européen des brevets

(11) **EP 3 163 270 A1**

(12) **EUROPEAN PATENT APPLICATION**
published in accordance with Art. 153(4) EPC

(43) Date of publication:
**03.05.2017 Bulletin 2017/18**

(21) Application number: **15811793.7**

(22) Date of filing: **12.06.2015**

(51) Int Cl.:
*G01H 17/00* $^{(2006.01)}$    *G01M 99/00* $^{(2011.01)}$
*G06F 17/17* $^{(2006.01)}$    *G06F 17/50* $^{(2006.01)}$

(86) International application number:
**PCT/JP2015/067051**

(87) International publication number:
**WO 2015/198894 (30.12.2015 Gazette 2015/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **27.06.2014 JP 2014133142**

(71) Applicant: **The University of Tokyo
Tokyo 113-8654 (JP)**

(72) Inventors:
• **NAKANO, Kimihiko
  Bunkyo-ku, Tokyo 113-8654 (JP)**
• **TSUJI, Hiromichi
  Bunkyo-ku, Tokyo 113-8654 (JP)**

(74) Representative: **Cabinet Plasseraud
66 rue de la Chaussée d'Antin
75440 Paris Cedex 09 (FR)**

(54) **INFORMATION PROCESSING DEVICE, INFORMATION PROCESSING METHOD, PROGRAM, AND RECORDING MEDIUM**

(57)    An information processing apparatus is equipped with an input unit which inputs a first self-transfer function which is acquired by measuring a response at an evaluation point to an input from the evaluation point and each first transfer function which is acquired by measuring a response between the respective connection points to the input, a first estimation unit which estimates each second self-transfer function by using the first self-transfer function and each first transfer function, a first calculation unit which calculates an element vector of each connection point on the basis of each second self-transfer function which has been estimated by the first estimation unit, a second estimation unit which estimates each second transfer function between the connection points on a vector space by using the element vector of each connection point, and a construction unit which constructs a third transfer function by using each second self-transfer function and each second transfer function.

FIG. 2

**Description**

**Technical Field**

The present invention relates to an information processing apparatus, an information processing method, a program and a recording medium.

**Background Art**

In development of precise industrial products such as automobiles, airplanes, robots and so forth, evaluation of a sound, a vibration and so forth in actual operation of the product is conducted and a transfer path which exerts influence on a position where the evaluation has been performed is analyzed. A part to be modified is specified from a result of this analysis, the specified part is modified and thereby improvement of the product is promoted.

The transfer path analysis is, the product to be an object for analysis is divided into partial structures and they are defined, and a contribution analysis is performed at a connection point where delivery of force between the partial structures is performed. The conventional analysis technique is mainly classified into two of a method of separating it into the partial structures and estimating the force imparted to the connection point and a method of estimating the contribution of the transfer path from the vibration of the actual operation without separating it into the partial structures (for example, see Non-Patent Document 1).

Citation List

Non-Patent Document

Non-Patent Document 1: Gajdatsy P., Jansens K., Desmet W., Van der Auweraer H., "Application of the Transmissibility Concept in Transfer Path Analysis" ISMA2010-0031, (2010)

**Summary**

Technical Problem

The current situation is such that the latter method is not yet sufficient in analysis accuracy and therefore the former method is mainly performed.

However, in a case where the former method is applied to the development of the precise industrial products such as the automobiles, the airplanes, the robots and so forth and transfer functions are to be obtained, there exist at least two problems which will be described below.

Problem 1: Huge man-hour is taken for separating it into the partial structures.

Problem 2; Huge man-hour is taken for measurement of a drive point function (a transfer function that an input point and a response point locate at the same position) at each connection point of the separated partial structure and the transfer function between the connection points.

Accordingly, a predetermined aspect of the present invention aims to provide an information processing apparatus, an information processing method, a program and a recording medium making it possible to reduce the man-hour for separation into the partial structures and the man-hour for measurement of the transfer functions and to estimate appropriate transfer functions.

Solution to Problem

An information processing apparatus in one aspect of the present invention is equipped with an input unit which, when performing a transfer path analysis of an object, an input-side structure and a response-side structure which is connected with the input-side structure via one or more connection point(s) and includes an evaluation point being defined for the object, inputs a first self-transfer function which is acquired by measuring a response at the evaluation point to an input from the aforementioned evaluation point and each first transfer function which is acquired by measuring a response between the respective connection points to the aforementioned input, a first estimation unit which estimates each second self-transfer function at each connection point on a vector space based on a transfer function between the aforementioned connection point and the aforementioned evaluation point by using aforementioned first self-transfer function and aforementioned each first transfer function, a first calculation unit which calculates an element vector of each connection point for a self-transfer function which is defined as an inner product of an input-side element vector and an output-side element vector on the basis of each second self-transfer function which has been estimated by the aforementioned first estimation unit, a second estimation unit which estimates each second transfer function between the connection points on the aforementioned vector space by using the element vector of the aforementioned each connection point, and a construction unit which constructs a third transfer function at each connection point of the aforementioned response-side structure on the aforementioned vector space by using the aforementioned each second self-transfer function and the aforementioned each second transfer function.

An information processing method in another aspect of the present invention is the one that a computer executes, when performing a transfer path analysis of an object, an input-side structure for the object and a response-side structure which is connected with the input-side structure via one or more connection point(s) and includes an evaluation point being defined, inputting a first self-transfer function which is acquired by measuring a response at the evaluation point to an input from the evaluation point and each first transfer function which is acquired by measuring a response at each connection point to the aforementioned input, estimating each second self-transfer function at each connection point on a vector space where the aforementioned evaluation point is present by using the aforementioned first self-transfer function and the each first transfer function, calculating an element vector of each connection point by using the aforementioned each second self-transfer function on the aforementioned vector space, estimating each second transfer function between all of the connection points on the aforementioned vector space by using an element vector of the aforementioned each connection point, and constructing a third transfer function at each connection point of the aforementioned response- side structure on the aforementioned vector space by using the aforementioned each second self- transfer function and the aforementioned each second transfer function.

Advantageous Effects of Invention

According to the predetermined aspect of the present invention, it is possible to reduce the man-hour for separation into the partial structures and the man-hour for measurement of the transfer functions and to estimate the appropriate transfer functions.

**Brief Description of Drawings**

FIG. 1 is a block diagram illustrating one example of a schematic configuration of an information processing apparatus in a first embodiment.

FIG. 2 is a block diagram illustrating one example of functions of the information processing apparatus in the first embodiment,

FIG. 3 is as diagram illustrating one example of an input-side structure and a response-side structure in a practical example.

FIG. 4 is a diagram illustrating one example of a space which is spanned with transfer functions in the practical example.

FIG. 5 is a flowchart illustrating one example of transfer path analysis processing in the first embodiment.

FIG. 6 is a diagram illustrating a result of simulation that a complicated vehicle model has been used by transfer path analysis of a conventional method.

FIG. 7 is a diagram illustrating a result of simulation that the complicated vehicle model has been used by transfer path analysis of the practical example.

FIG. 8 is a diagram illustrating actual vehicle test data for describing comparison between sound pressures in a case where a part has been replaced with another one.

FIG. 9 is a diagram illustrating simulation result data before and after part replacement using the transfer path analysis in the practical example for the vehicle described in FIG. 8.

FIG. 10 is a block diagram illustrating one example of functions of an information processing apparatus in a second embodiment.

FIG. 11 is a diagram for describing a simple model used in the second embodiment.

FIG. 12 is a diagram illustrating one example of a test result (a part 1) for evaluating estimation accuracy of a drive point function in the second embodiment.

FIG. 13 is a diagram illustrating one example of a test result (a part 2) for evaluating the estimation accuracy of the drive point function in the second embodiment.

FIG. 14 is a diagram illustrating one example of a test result (a part 1) for evaluating the estimation accuracy of a transfer function in the second embodiment.

FIG. 15 is a diagram illustrating one example of a test result (a part 2) for evaluating the estimation accuracy of the transfer function in the second embodiment.

FIG. 16 is a diagram illustrating one example of a test result for evaluating the estimation accuracy of a force generated at a degree of freedom 81 in the second embodiment.

FIG. 17 is a diagram illustrating one example of a test result for evaluating the estimation accuracy of the force generated at a degree of freedom 101 in the second embodiment.

FIG. 18 is a diagram illustrating one example of a test result for evaluating the estimation accuracy of the force generated at a degree of freedom 119 in the second embodiment.

FIG. 19 is a diagram illustrating one example of a test result for evaluating the estimation accuracy of an evaluation physical quantity of an evaluation point in the second embodiment.

## Description of Embodiments

In the following, embodiments of the present invention will be described in detail with reference to the appended drawings.

[First Embodiment]

<Configuration>

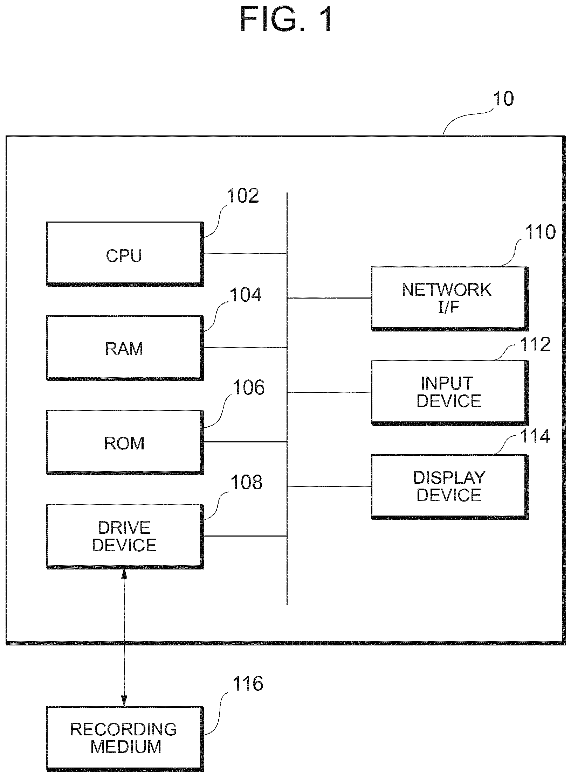

FIG. 1 is a block diagram illustrating one example of a schematic configuration of an information processing apparatus 10 in the first embodiment. As illustrated in FIG. 1, an information processing apparatus 10 has a CPU (Central processing Unit) 102, a RAM (Random Access Memory) 104, a ROM (Read Only Memory) 106, a drive device 108, a network I/F (Interface) 110, an input device 112, and a display device 114. These respective configurations are mutually connected to be data transmittable/receivable via a bus.

The CPU 102 is a control unit which conducts control of each device, and data arithmetic operation, processing in a computer. In addition, the CPU 102 is an arithmetic operation device which executes a program stored in the RAM 104 or the ROM 106 and adapted to conduct transfer path analysis processing. The CPU 102 receives input data from the input device 112, the network I/F 110 and so forth, arithmetically operates and processes it and outputs a result of arithmetic operation to the display device 114, a storage device and so forth.

The RAM 104 is, for example, a main storage unit and so forth. The RAM 104 is a storage device for storing or temporarily saving programs and data such as an OS (Operating System) which is basic software that the CPU 102 executes, application software and so forth.

The ROM 106 is a storage device for storing data related to, for example, the application software and so forth.

The drive device 108 reads the program and the data out of a recording medium 116, for example, a CD-ROM, a SD card and so forth and installs them into the storage device and downloads them therefrom.

In addition, a predetermined program is stored into the recording medium 116, and the program which has been stored into this recording medium 116 is installed into the information processing apparatus 10 via the drive device 108. The predetermined program so installed becomes to be executable by the information processing apparatus 10.

The network I/F 110 is an interface between peripheral equipment having a communication function and the information processing apparatus 10. In addition, the network I/F 110 is connected thereto over a network such as, for example, LAN (Local Area Network), WAN (Wide Area Network) and so forth which have been constructed by a data transfer path such as cable and/or radio line(s).

The input device 112 has a keyboard equipped with a cursor key, numeral input and various function keys and so forth, a mouse, a slide pad and so forth adapted to conduct key selection and so forth on a display screen of the display device 114. In addition, the input device 112 is a user interface through which a user gives an operator guidance and inputs data into the CPU 102.

The display device 114 is configured by an LCD (Liquid Crystal Display) and so forth and display according to display data which is input from the CPU 102 is conducted. Incidentally, the input device 112 and the display device 114 may be provided outside the information processing apparatus 10.

<Functions>

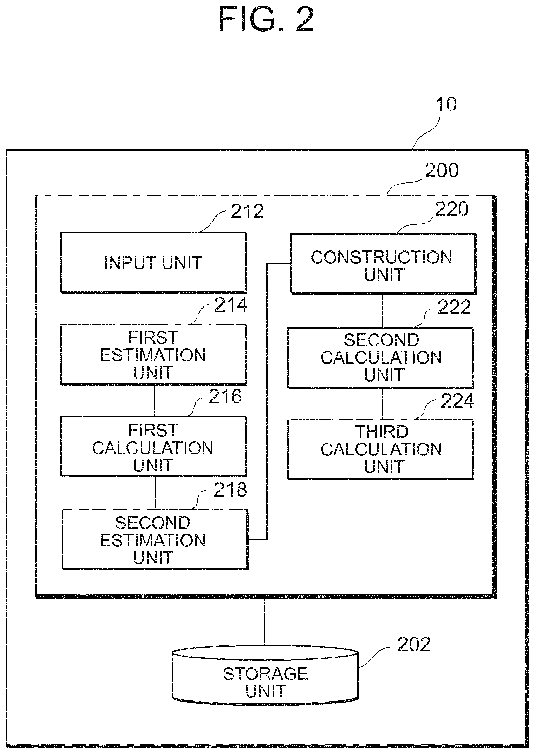

Next, functions of the information processing apparatus 10 will be described. FIG. 2 is a block diagram illustrating one example of the functions of the information processing apparatus 10 in the first embodiment. The information processing apparatus 10 illustrated in FIG. 2 is equipped with an arithmetic operation unit 200 and a storage unit 202. The arithmetic operation unit 200 is equipped with at least an input unit 212, a first estimation unit 214, a first calculation unit 216, a second estimation unit 218, a construction unit 220, a second calculation unit 222, and a third calculation unit 224.

Incidentally, the arithmetic operation unit 200 illustrated in FIG. 2 may be implemented by, for example, the CPU 102, the RAM 104 as a work memory and so forth. The CPU 102 is capable of executing the function of each unit in the arithmetic operation unit 200 by executing the application program for conducting the transfer path analysis.

In addition, the storage unit 202 may be implemented by, for example, the RAM 104 and/or the ROM 106. The storage unit 202 stores parameters, a result of arithmetic operations and so forth used for the transfer path analysis. Here, when performing the transfer path analysis of an object, the following definitions are conducted.

(Definition 1)

Partial structures which are called an input-side structure and a response-side structure which is connected with this input-side structure via one or more connection point(s) and includes an evaluation point are defined for the object.

(Definition 2)

In regard to action-reaction forces generated at each connection point between the input-side structure and the response-side structure, when the structure has been separated into them, they are defined as external forces to the input-side structure and the response-side structure and when they are connected together with no separation of the structure, they are defined as internal forces.

(Definition 3)

An analysis technique which is proposed in the following is directed to a system which is capable of estimating a force in actual operation at this each connection point, multiplying a transfer function from each connection point e to an evaluation point i of the response-side structure by it and expressing physical quantities (for example, a sound, a vibration, a strain, an electric current, a voltage and so forth) at the evaluation point approximately by the sum total thereof.

Next, the following measurements are conducted in order to perform the transfer path analysis at each connection point of the response-side structure of the object.

(Measurement 1)

The physical quantities (for example, the sound, the vibration and so forth) with which evaluation of the object is possible are measured at the evaluation point i of the object in actual operation of the object. Simultaneously with this, the physical quantities (for example, an acceleration and so forth) with which it is possible to estimate contribution of the transfer path are measured also at the connection point e of the response-side structure.

On this occasion, it is desirable that all pieces of data so measured be data (such as a cross-correlation function, a cross-power spectrum and so forth) which have been correlated with one another with the evaluation point i being set as a standard.

(Measurement 2)

Next, a response at the evaluation point i to an input from the evaluation point i is measured in order to estimate a force generated in the response-side structure of the object. Simultaneously with this, also a response at each connection point e to the input from the evaluation point i is measured. Thereby, a transfer function (hereinafter, also called a first self-transfer function, a drive point function) and a transfer function (hereinafter, also called each first transfer function) between the respective connection points e which have been measured when conducting the transfer path analysis of the object are acquired.

Incidentally, in the conventional measurement, since inputting had been conducted from each connection point and the drive point function at each connection point and the transfer function between the respective connection points had been measured, huge man-hour had been taken for measurement of them with increasing the number of the connection points.

On the other hand, in the case of the first embodiment, since it is possible to acquire required measurement results by only one-time testing, it is possible to drastically reduce the man-hour taken for the analysis of the transfer path. Incidentally, in a case where there exists the plurality of evaluation points, all measurements become possible by one-time testing by giving an uncorrelated signal as the input to all of the evaluation points.

The first self-transfer function and each first transfer function which have been acquired in the measurement 2 are input into the information processing apparatus 10 as input data. At this time, the input data is input into the information processing apparatus 10 via the network I/F 110, the input device 112 and so forth.

The input unit 212 inputs the input data through the network I/F 110, or the input device 112 and so forth. The input data is the first self-transfer function at the evaluation point and each first transfer function at each connection point which have been measured, for example, when conducting the transfer path analysis of the object. The input unit 212 outputs the first self-transfer function and each first transfer function which have been input to the first estimation unit 214.

The first estimation unit 214 estimates each second self-transfer function at each connection point on a vector space which is based on the transfer function between the connection point and the evaluation point by using the first self-transfer function and each first transfer function which have been acquired from the input unit 212.

The first calculation unit 216 calculates an element vector of each connection point from each second self-transfer function which has been estimated by the first estimation unit 214 for a self-transfer function which is defined as an inner product of an input-side element vector and an output-side element vector.

The second estimation unit 218 estimates each second transfer function between the connection points on the vector space by using the element vector of each connection point.

The construction unit 220 constructs a third transfer function at each connection point of the response-side structure on the vector space by using each second self-transfer function and each second transfer function which have been estimated. Thereby, it becomes possible to reduce the man-hour for separation into the partial structures and the man-hour for measurement of the transfer functions and to estimate appropriate transfer functions.

In addition, the second calculation unit 222 calculates the force generated at each connection point in operation on the vector space by using response data at each connection point of the response-side structure which has been measured in operation of the object and the third transfer function which has been constructed.

The third calculation unit 224 obtains the sum total of multiplying the first transfer function at each connection point by the force generated at the corresponding connection point and calculates the contribution of the transfer path to the evaluation physical quantities at the evaluation point i. A ratio occupied by a multiplied value at a predetermined connection point in the sum total becomes the contribution of the transfer path at that connection point. Thereby, it is possible to promote improvement of the object by using the calculated contribution.

[Practical Example]

Next, a practical example that a vehicle (in the following, an automobile will be taken for example) is set as the object, the sound and the vibration are set as the physical quantities with which evaluation of the vehicle is possible, and the acceleration is set as the physical quantity with which estimation of the contribution of the transfer path at the connection point is possible will be described. In the present practical example, the following definitions are conducted.

(Definition 1)

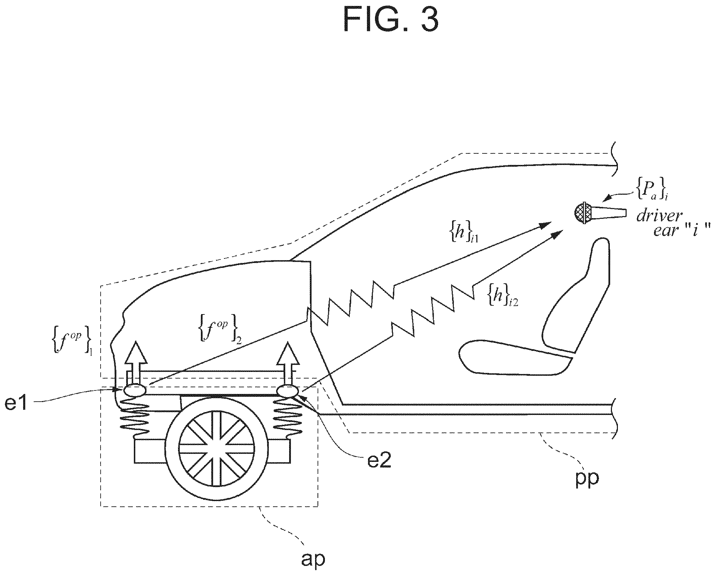

FIG. 3 is a diagram illustrating one example of the input-side structure and the response-side structure in the practical example. When the transfer path analysis is performed on the automobile, first, the partial structures which are called an input-side structure (Active part) ap and a response-side structure (Passive part) pp which includes the evaluation point are defined for the automobile.

Here, as illustrated in FIG. 1, it is set that forces (for example, the vibrations when travelling) $\{f^{op}\}_1$, $\{f^{op}\}_2$ in actual operation are added to connection points e1, e2. In addition, it is set that the sound at the evaluation point i is $\{P_a\}_i$ and the transfer functions from the connection points e1, e2 to the evaluation point i are respectively $[h_{i1}]$, $[h_{i2}]$.

(Definition 2)

Next, in regard to the action-reaction forces generated at the respective connection points e1, e2 of the input-side structure ap and the response-side structure pp, in a case where the structure has been separated, they are defined as the external forces to the input-side structure ap and the response-side structure pp, and in a case where the structure is not separated, they are defined as the internal forces to the input-side structure ap and the response-side structure pp.

(Definition 3)

In the present practical example, the inventors and others express the sound at the evaluation point i by a formula (1) by using a transfer function $[H]_{in}$ and a force $\{F^{op}\}_n$ in actual operation.
[Numerical Formula 1]

$$\{P_a\}_s = [H]_{sn}\{F^{op}\}_n \qquad \cdots(1)$$

A direction that the force is exerted at this each connection point e is considered and the force $\{F^{op}\}_n$ in actual operation is estimated. For example, in a case where it has been set that the connection point e is s in number and the direction of the force is three directions in number, the total number of forces to be estimated amounts to n = s x 3.
The transfer function $[H]_{in}$ from each connection point e to the evaluation point i of the response-side structure pp is multiplied by the total number n of the forces and the sum total thereof is approximated as the sound and the vibration at the evaluation point i.

<Procedures of Transfer Path Analysis>

Next, in the practical example, the following procedures are conducted in order to perform the transfer path analysis at each connection point e of the response-side structure pp.

<<Procedure 1>>

First, in actual operation of the automobile, the sound $\{P_a\}_i$ and a vibration $\{U^{op}\}i$ (U indicates U with an umlaut) with which evaluation of the product is possible at the evaluation point i of the object are measured by sensors. Simultaneously with this measurement, an acceleration $\{U^{op}\}_m$ with which estimation of the contribution of the transfer path is possible is measured also at the connection point e of the response-side structure pp. At this time, it is desirable that the number of them m to be measured be more than or equal to the number n of the forces to be obtained ($m \geq n$).
In this case, it is desirable that all pieces of data which have been measured be pieces of data which have been correlated with one another with the evaluation point i being set as the standard. For example, in a case of taking a cross-correlation function and analyzing it along a frequency axis, the pieces of data which have been correlated with one another are pieces of data which have been converted into cross power vectors.

<<Processing of Conventional Method>>

Before describing a procedure 2 in the practical example, processing of the conventional method will be described in order to compare it with the practical example.
In the conventional method, the force generated in the response-side structure pp of the automobile is estimated by using the following formula (2) and therefore measurement of $[G]_{mn}$ is performed. $[G]_{mn}$ is expressed by a formula (3).
[Numerical Formula 2]

$$\{F^{op}\}_n = [G]_{mn}^{-1}\{\ddot{U}^{op}\}_m \qquad \cdots(2)$$

[Numerical Formula 3]

$$[G(k)]_{mn} = \begin{bmatrix} \{h(k)\}_{e_1 e_1} & \{h(k)\}_{e_1 e_2} & \cdots \\ \{h(k)\}_{e_2 e_1} & \{h(k)\}_{e_2 e_2} & \cdots \\ \vdots & \vdots & \ddots \end{bmatrix} \qquad \cdots(3)$$

In order to measure this $[G]_{mn}$, the input-side structure ap is separated from the automobile and the response-side structure pp is considered. A drive point function $\{h\}_{ee}$ and a transfer function $\{h\}_{ej}$ between the respective connection points when excited for every input directions (in general, three directions in which excitation is possible) of each connection point e of the response-side structure are measured.

The subscript ee on the lower right of this drive point function $\{h\}_{ee}$ means a diagonal term and corresponds to the diagonal term of $[G]_{mn}$. In addition, the subscript ej on the lower right of the transfer function $\{h\}_{ej}$ means a non-diagonal term and corresponds to the non-diagonal term of $[G]_{mn}$. In the conventional method, there is such a problem that the huge man-hour is taken for measuring this $[G]_{mn}$.

On the other hand, in the practical example, the following measurements are conducted. For example, the evaluation of the automobile is the sound $\{P_a\}_i$ (the acceleration $\{U^{op}\}_i$ in case of the evaluation of the vibration) at the evaluation point i, the distribution analysis of the transfer path is performed. In a case where the result of measurement at the connection point e of the response-side structure pp is the acceleration $\{U^{op}\}_m$ of the vibration, it is separated only to the response-side structure pp, and the measurement is conducted at the connection point e of the response-side structure pp by using an excitation machine.

At this time, an acceleration $\{u\}_n$ (u indicates u with the umlaut) is measured at the connection point e of the response-side structure pp and simultaneously therewith a sound pressure response $\{p_a\}_i$ (an acceleration response $\{u\}_i$ in case of the vibration evaluation) is measured in the vicinity of the evaluation point i.

Thereby, the drive point function $\{h\}_{ee}$ which is at the same position e as the connection point which configures $[G]_{mn}$ of the formula (2) and the transfer function $\{h\}_{ej}$ between the connection points e are measured and the input $\{F^{op}\}_n$ is obtained. Simultaneously with this, all of the transfer functions $\{h\}_{ei}$ from the connection points e to the evaluation point i which configure $[H]_{in}$ of the formula (1) are also measured and input contribution is obtained.

On the other hand, in a case where the result of measurement at the connection point e of the response-side structure pp that the contribution analysis of the transfer path is performed is a strain $\{\delta^{op}\}_m$ of the vibration, it is separated only to the response-side structure pp. Next, a strain $\{\delta\}_n$ is measured in the vicinity of the connection point by using the excitation machine at the connection point e of the response-side structure pp. Simultaneously with this, the sound pressure $\{p_a\}_i$ (the acceleration response $\{u\}_i$ in case of evaluation of the vibration) is measured at the evaluation point i.

Thereby, the drive point function $\{h\}_{ee}$ of the strain response in the vicinity of the connection point e and the transfer function $\{h\}_{ej}$ between the strain responses in the vicinity of the connection point e which configure $[G]_{mn}$ of the formula (2) are measured and the input $\{F^{op}\}_n$ is obtained. Incidentally, since, to be accurate, an input position and a response position do not match each other, the drive point function $\{h\}_{ee}$ becomes the transfer function. In addition, simultaneously with measurement of the drive point function $\{h\}_{ee}$ and the transfer function $\{h\}_{ej}$, all of the transfer functions $\{h\}_{ei}$ from the connection points e to the evaluation point i which configure $[H]_{in}$ of the formula (1) are also measured and the input contribution is obtained.

From the above, it is found that in a case where the conventional method as described above has been used, there are such two problems that first, it is necessary to separate it to the partial structures in order to perform the measurement and therefore the man-hour is greatly taken, and next, even when the measurement is started once, the number of measurement points is very large and therefore the man-hour is greatly taken.

<<Procedure 2>>

Next, the procedure 2 of the practical example will be described. In the practical example, $[G]_{mn}$ is not measured differently from the conventional method and a drive point function $\{h^i(k)\}_{ee}$ which contributes to the evaluation point i which is necessary for analysis of the transfer path and the transfer function $\{h\}_{ej}$ between the connection points e are estimated by using the later described formulae which are proposed by the inventors and others. k is a mincing step of the frequency and so forth. Thereby, in the practical example, the drive point function and the transfer function are appropriately estimated and therefore it is possible to greatly reduce the man-hour for measurement.

First, as a preliminary stage of the procedure 2 in the practical example, a space which is spanned with a transfer function $\{h\}_{ei}$ which has been excited by the input at the evaluation point i is defined. Next, on this space, the transfer functions $\{h\}_{ei}$ between the connection points e and the evaluation point i are set as two response vectors configured by the inner product of an output-side response vector $\{\phi^i(k)\}_e$ and an input-side vector $\{\phi^i(k)\}_i$ and this vector

is defined as the element vector.

Here, when using the defined element vector, it is possible to assume that the transfer function $\{h\}_{ei}$ between the connection point e and the evaluation point i is configured by the inner product of the response vectors on the space which is spanned with the transfer function $\{h\}_{ei}$ which has been excited by the input at the evaluation point i by a formula (4). The response vectors are the output-side element vector $\{\phi^i(k)\}_e$ and the input-side element vector $\{\phi^i(k)\}_i$.

Incidentally, the subscript "i" on the right shoulder of the element vector means that it is the response vector on the space which is spanned with the transfer function which has been excited by the input i.

[Numerical Formula 4]

$$\{h(k)\}_{ei} = \left\{\Phi^i(k)\right\}_e^T \cdot \left\{\Phi^i(k)\right\}_i \qquad \cdots (4)$$

It is possible to suppose that a drive point function $\{h\}_{ii}$ which is at the same position i as the evaluation point is configured by the inner product of the output-side element vector $\{\phi^i(k)\}_i$ and the input-side element vector $\{\phi^i(k)\}_i$ by a formula (5) similarly to the formula (4).

[Numerical Formula 5]

$$\{h(k)\}_{ii} = \left\{\Phi^i(k)\right\}_i^T \cdot \left\{\Phi^i(k)\right\}_i \qquad \cdots (5)$$

It becomes possible to estimate, by the following formula (6), the drive point function $\{h^i\}_{ee}$ which becomes an component on the space which is spanned with the transfer function $\{h\}_{ei}$ which has been excited by the input at the evaluation point i in the drive point functions $\{h\}_{ee}$ at points (non-excited points) which are not actually excited by using the above-mentioned formulae (4) and (5).

[Numerical Formula 6]

$$\left\{h^i(k)\right\}_{ee} = \{h(k)\}_{ei} \cdot \{h(k)\}_{ei} / \{h(k)\}_{ii}$$

$$\cdots (6)$$

$$= \left\{\Phi^i(k)\right\}_e^T \cdot \left\{\Phi^i(k)\right\}_e$$

In the practical example, in order to apply this formula (6) thereto, two kinds of the transfer functions $\{h\}_{ei}$ between all of the connection points e and the evaluation point i and the drive point function $\{h\}_{ii}$ at the evaluation point i which are substituted into the right side are measured.

Since the measurement in the practical example is different from that in the conventional method and it is possible to acquire the required measurement results by one-time testing, it makes a great reduction in man-hour possible in comparison with the above-mentioned conventional method. For example, in case of the measurement in the practical example, even in a case where there exist many evaluation points, it is possible to perform all measurements by one-time testing at all points of the evaluation points thereof by giving the uncorrelated signal as the input.

Reciprocity of the transfer functions $\{h\}_{ei}$ between all of the connection points e and the evaluation point i is established between the evaluation point i which has been evaluated in the actual operation in the procedure 1 and the connection point e of the response-side structure pp. Accordingly, it is possible to acquire the transfer functions $\{h\}_{ei}$ by giving the input from the evaluation point i side and measuring the responses at all of the connection points e. Simultaneously with this measurement, the drive point function (the transfer function which is obtained by measurement of the response at the same position i as the input point) $\{h\}_{ii}$ on the evaluation point i side is measured.

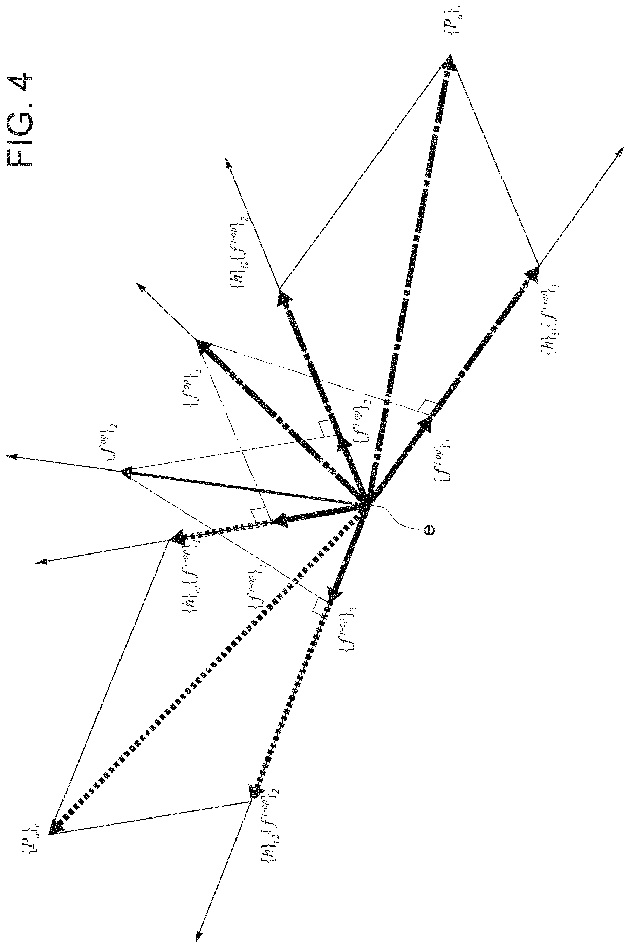

FIG. 4 is a diagram illustrating one example of the space which is spanned with the transfer functions in the actual example. It becomes possible to estimate a drive point function $\{h^i\}_{ee}$ at the connection point e which is the center of the axis of coordinates and is a non-excited point on a vector space [H] that the evaluation point i illustrated in FIG. 2 is present by using all of the transfer functions and the drive point function which have been measured at one time as described above. Incidentally, the symbol "i" on the right shoulder indicates that it is the response on the vector space [H] which is spanned with the transfer function $\{h\}_{ei}$ between the connection point e and the evaluation point i on the response-side structure pp.

In the practical example, the information processing apparatus 10 estimates $[G]_{mn}$ in the formula (2) on the vector space [H] by using this drive point function $\{h^i\}_{ee}$ and estimates a force $\{f^{i\text{-op}}\}_e$ which is generated at the connection point e of the response-side structure pp and is present on the vector space [H].

First, the input unit 212 of the information processing apparatus 10 inputs the transfer function $\{h\}_{ei}$ and the drive point function $\{h\}_{ii}$ which have been measured. Next, the first estimation unit 214 of the information processing apparatus 10 calculates them by substituting the Euler's formula for each transfer function $\{h^i(k)\}_{ei}$ and the drive point function $\{h^i(k)\}_{ii}$ in the formula (6) in the actual numerical value measurement as expressed in the following formulae (7) and (8). Thereby, it becomes possible for the arithmetic operation unit 200 to stabilize and speed up calculation of minute numerical values.

[Numerical Formula 7]

$$\{h^i(k)\}_{ei} = \{A^i(k)\}_{ei} \cdot exp\left\{j\{\theta^i(k)\}_{ei} \cdot \pi/180\right\} \qquad \cdots(7)$$

[Numerical Formula 8]

$$\{h^i(k)\}_{ii} = \{A^i(k)\}_{ii} \\ \cdot exp\left\{j\{\theta^i(k)\}_{ii} \cdot \pi/180\right\} \qquad \cdots(8)$$

The first estimation unit 214 calculates the Euler's formula expression (a formula (9)) of the drive point function at the connection point e of the non-excited point and an amplitude and a phase (formulae (10) and (11)) thereof as follows by substituting the above-mentioned formulae (7), (8) into the formula (6).

[Numerical Formula 9]

$$\{h^i(k)\}_{ee} = \{A^i(k)\}_{ee} \cdot exp\left\{j\{\theta^i(k)\}_{ee} \cdot \pi/180\right\} \qquad \cdots(9)$$

[Numerical Formula 10]

$$\{A^i(k)\}_{ee} = \{A^i(k)\}_{ei} \cdot \{A^i(k)\}_{ei}/\{A^i(k)\}_{ii} \qquad \cdots(10)$$

[Numerical Formula 11]

$$\{\theta^i(k)\}_{ee} = \{\theta^i(k)\}_{ei} + \{\theta^i(k)\}_{ei} - \{\theta^i(k)\}_{ii} \qquad \cdots(11)$$

Next, the first calculation unit 216 calculates an element vector $\{\phi^i\}_e$ on the side of the response point e which is each connection point from each drive point function $\{h^i\}_{ee}$ which has been estimated by the first estimation unit 214 and is present on the vector space [H].

The first calculation unit 216 calculates the element vector $\{\phi^i\}_e$ (a formula 12)) and the amplitude and the phase (formulae(13) and (14)) thereof by using the Euler's formula for this calculation.

[Numerical Formula 12]

$$\{\Phi^i(k)\}_e = \{A^i(k)\}_e \cdot exp\left\{j\{\theta^i(k)\}_e \cdot \pi/180\right\} \qquad \cdots(12)$$

[Numerical Formula 13]

$$\left\{A^i(k)\right\}_e = \sqrt{\left\{A^i(k)\right\}_{ee}} \qquad \cdots(13)$$

[Numerical Formula 14]

$$\left\{\theta^i(k)\right\}_e = \frac{1}{2} \cdot \left\{\theta^i(k)\right\}_{ee} \qquad \cdots(14)$$

<<Procedure 3>>

Next, the second estimation unit 218 estimates transfer functions $\{h^i\}_{ej}$ between all of the connection points on the vector space [H] by using the element vectors $\{\phi^i\}_e$ at the connection points e which are the plurality of non-excited points of the response-side structure pp which have been calculated in the procedure 3, by using formulae (15) to (17).

[Numerical Formula 15]

$$\left\{h^i(k)\right\}_{ej} = \left\{\Phi^i(k)\right\}_e^T \cdot \left\{\Phi^i(k)\right\}_j \qquad \cdots(15)$$

[Numerical Formula 16]

$$\left\{A^i(k)\right\}_{ej} = \left\{A^i(k)\right\}_e \cdot \left\{A^i(k)\right\}_j \qquad \cdots(16)$$

[Numerical Formula 17]

$$\left\{\theta^i(k)\right\}_{ej} = \left\{\theta^i(k)\right\}_e + \left\{\theta^i(k)\right\}_j \qquad \cdots(17)$$

From the above, the construction unit 220 constructs a transfer function $[G^i]_{ee}$ at the connection point e of the response-side structure pp on the vector space [H] by using the drive point functions $\{h^i\}_{ee}$ at all of the connection points e and the transfer function $\{h^i\}_{ej}$ which have been estimated, as expressed in a formula (18). Thereby, excitation from the connection point e needs not be performed in order to obtain the transfer function $[G^i]_{ee}$.

[Numerical Formula 18]

$$\left[G^i(k)\right]_{mn} = \begin{bmatrix} \left\{h^i(k)\right\}_{e_1 e_1} & \left\{h^i(k)\right\}_{e_1 e_2} & \cdots \\ \left\{h^i(k)\right\}_{e_2 e_1} & \left\{h^i(k)\right\}_{e_2 e_2} & \cdots \\ \vdots & \vdots & \ddots \end{bmatrix} \qquad \cdots(18)$$

Here, the subscripts "$e_1 e_2$" and "$e_2 e_1$" indicate non-diagonal terms and have the same meanings as the subscripts "ej" and "je".

<<Procedure 4>>

Next, the second calculation unit 222 calculates the force generated at the connection point e of the response-side structure pp in the actual operation of the automobile. The second calculation unit 222 calculates forces $\{F^{i\text{-op}}\}_n$ generated at all of the connection points e in the actual operation on the vector space [H] by using the response $\{U^{op}\}_m$ at the connection point e of the response-side structure pp which has been measured in the actual operation in the procedure 1 and the transfer function $[G^i]_{ee}$ on the vector space $[H]$ which has been estimated in the procedure 2. Incidentally, it is desirable that the response at the connection point e be data which is correlated with the evaluation point such as data which has been formed into a cross power spectrum with the evaluation point being set as the standard and so forth.

[Numerical Formula 19]

$$\{F^{i-op}\}_n = [G^i]_{mn}^{-1}\{\ddot{U}^{op}\}_m \qquad \cdots(19)$$

<<Procedure 5>>

Next, the third calculation unit 224 multiples a matrix $[H]_{in}$ which has been constructed by adding up the evaluation point i which has been measured by performing excitation from the evaluation point side in the procedure 2 and the transfer function $\{h\}_{ei}$ between the respective connection points e of the response-side structure pp as an inverse transfer function which is a transfer function from the side of each connection point e to the evaluation point i by utilizing the reciprocity by the force $\{F^{i-op}\}_n$ which has been obtained in the procedure 4. The third calculation unit 224 calculates the contribution of the transfer path to the evaluation physical quantities (the sound $\{P_a\}_i$, the vibration $\{U^{op}\}_i$ and so forth) at the evaluation point i by summing up the multiplied values. A ratio occupied by the multiplied value at a predetermined connection point in the sum total becomes the contribution of the transfer path at that connection point.

Here, the physical quantity (the sound $\{P_a\}_i$ in the case expressed in a formula (20)) is present on the space which is spanned with the transfer function $[H]_{in}$. Therefore, since the contribution of the transfer path to be obtained is, only the input $\{F^{i-op}\}_n$ which has been projected onto the above-mentioned space has a meaning in the actual inputs $\{F^{op}\}_n$ the result of the formula (20) becomes equal to that of the formula (1).

[Numerical Formula 20]

$$\{P_a\}_i = [H]_{in}\{F^{i-op}\}_n \qquad \cdots(20)$$

<Concrete Example in Practical Example>

Here, the respective procedures in the above-mentioned practical example will be described by using a case example. For example, the evaluation for the automobile is set to the sound $\{P_a\}_i$ (an acceleration $\{U^{op}\}_i$ in case of evaluation of the vibration) at the evaluation point i. In addition, a result of measurement at the connection point e of the response-side structure that the analysis of contribution of the transfer path is performed is set to the acceleration $\{U^{op}\}_m$ of the vibration.

In this case, volume acceleration excitation $\{q\}_i$ using a loud speaker is performed at the evaluation point. Incidentally, in case of the vibration evaluation, the exciting machine is used. The sound pressure response $\{p_a\}_i$ (the acceleration response $\{u\}_i$ in case of the vibration evaluation) is measured in the vicinity of the evaluation point i, simultaneously with measurement of the acceleration $\{u\}_n$ at the connection point e of the response-side structure pp.

Thereby, the drive point function $\{h\}_{ii}$ which is at the same position i as the evaluation point of the transfer function $\{h\}_{ei}$ from the connection point e to the evaluation point i is measured.

On the other hand, in a case where the result of measurement at the connection point e of the response-side structure pp that the analysis of contribution of the transfer path is performed is the strain $\{\delta^{op}\}_m$ of the vibration, the volume acceleration excitation $\{q\}_i$ using the loud speaker is performed at the evaluation point. Incidentally, in case of the vibration evaluation, the exciting machine is used. The acceleration $\{u\}_n$ is measured at the connection point e of the response-side structure pp and further the strain $\{\delta\}_n$ in the vicinity of the connection point e is measured. Simultaneously with this, the sound pressure response $\{p_a\}_i$ (the acceleration response $\{u\}_i$ in case of the vibration evaluation) is measured in the vicinity of the evaluation point i.

Thereby, the transfer function $\{h\}_{ei}$ to the evaluation point i is measured from the acceleration response at the connection point e and the strain response in the vicinity thereof, and simultaneously therewith, the drive point function $\{h\}_{ii}$ at the same position i as the evaluation point is measured.

A result which has been measured in the above-mentioned measurement processing is input into the input unit 212 of the information processing apparatus 20 and thereby it becomes possible to estimate the transfer function $\{G^i\}_{ee}$ which is expressed in the formula (18) and is at the connection point e on the vector space $[H]$ with no excitation.

The information processing apparatus 20 is capable of solving the two problems of the conventional method by using the estimated transfer function, the formula (19) and the formula (20). Specifically, according to the practical example, it is possible to perform the contribution analysis of the transfer path without separating it into the partial structures and it is possible to obtain all of the required results by one-time measurement, and therefore it becomes possible to solve the two problems of the conventional method.

Incidentally, when obtaining the input by using the method of the practical example, in a case where it has been separated into the input-side structure ap and the response-side structure pp as in the conventional method, the external forces generated in the partial structures are calculated. In addition, in a case where it is not separated into the input-side structure ap and the response-side structure pp, the internal force between them is calculated.

Measurements of also a transfer function that these estimated forces are multiplied together in a state where it has been separated into the input-side structure ap and the response-side structure pp and in a state where it is not separated into the input-side structure ap and the response-side structure pp are used. Accordingly, since resultant transfer contribution ratios become almost equal to each other regardless of whether the structure is separated into the input-side one and the response-side one or not, any of them may be performed.

In addition, in a case where input identification and transfer path analysis along a time-axis are performed by using the practical example, when obtaining the input and the contribution, the measured data is temporarily converted into another coordinate axis such as a frequency axis and so forth and is then analyzed. Thereby, the input and the contribution are obtained by using the method of the practical example and the analysis along the time-axis is performed by returning it to the time-axis.

<Operation>

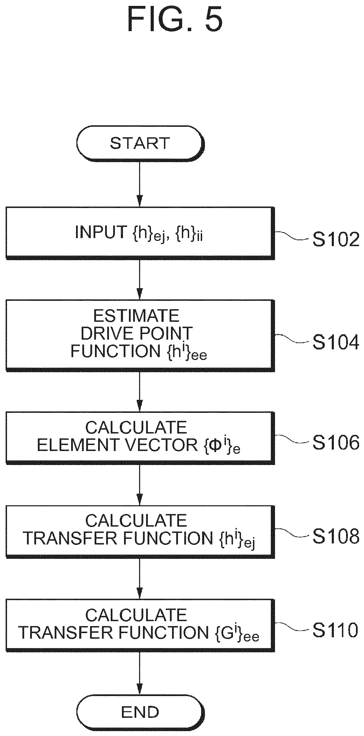

The operation of the information processing apparatus 10 will be described. FIG. 5 is a flowchart illustrating one example of transfer path analysis processing in the first embodiment.

In step S102, the input unit 212 inputs the transfer function $\{h\}_{ei}$ (each first transfer function) and the drive point function $\{h\}_{ii}$ (the first self-transfer function) which have been measured.

In step S104, the first estimation unit 214 estimates each second self-transfer function $\{h^i\}_{ee}$ at each connection point on the vector space based on the transfer function between the connection point and the evaluation point by using the first self-transfer function and each first transfer function.

In step S106, the first calculation unit 216 calculates the element vector of each connection point from each second self-transfer function which has been estimated by the first estimation unit 214, for the self-transfer function which is defined as the inner product of the input-side element vector and the output-side element vector.

In step S108, the second estimation unit 218 estimates each second transfer function between the connection points on the vector space by using the element vector of each connection point.

In step S110, the construction unit 220 constructs the third transfer function at each connection point of the response-side structure pp on the vector space by using each second self-transfer function and each second transfer function. Thereby, it is possible to reduce the man-hour for separation into the partial structures and the man-hour for measurement of the transfer functions and to estimate the appropriate transfer functions.

<Test Result>

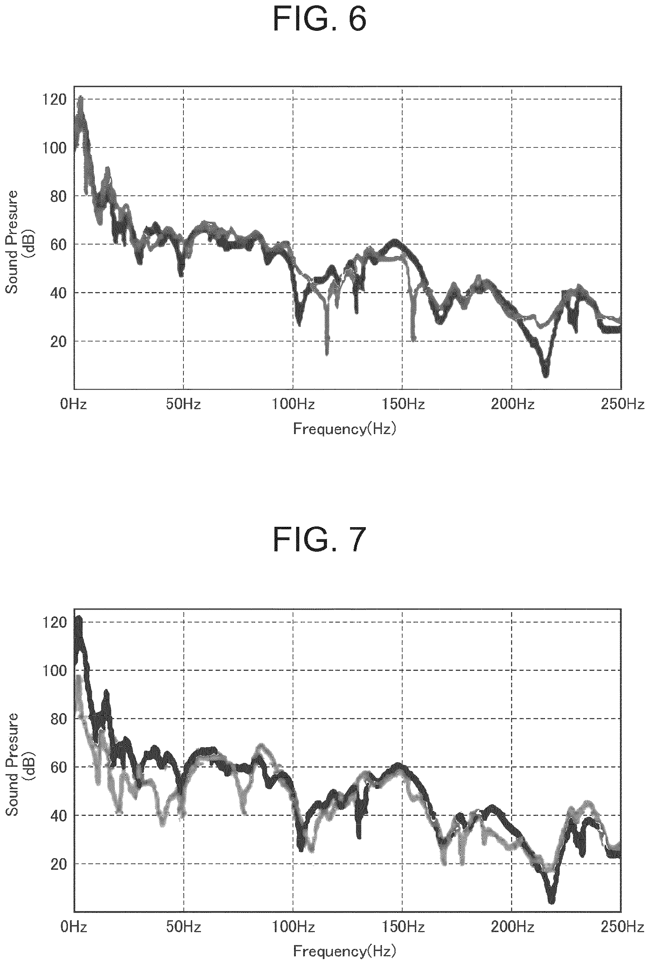

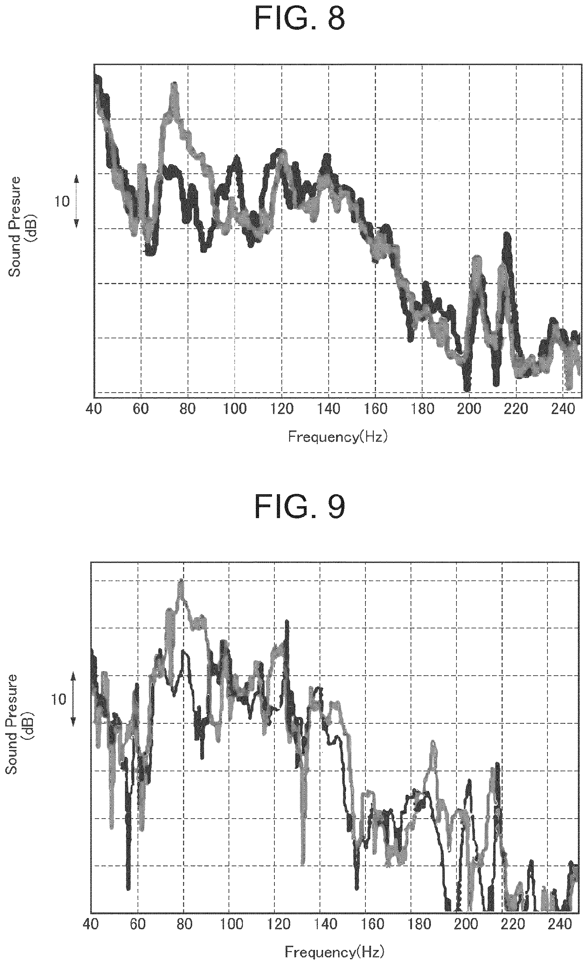

In the following, the inventors and others perform two tests. The first one is a simulation test that a complicated vehicle model which simulates phenomena of a vehicle running test has been used in order to reproduce a test under ideal conditions that there exists no disturbance (FIGs. 6, 7). In this simulation test, in order to reproduce the phenomena when running, the sound in a cabin when a displacement input has been given to a tire ground plane is calculated. The second one is a measurement test when street-running that a practical vehicle under conditions that there exit various disturbances has been used (FIG. 8, FIG. 9).

First, the first test will be described. FIG. 6 is a diagram illustrating a result of simulation (numerical value analysis) by the transfer path analysis of the conventional method and with the use of a complicated vehicle model. The conventional method illustrated in FIG. 6 is a method of performing dismantling it into the partial structures, performing inputting from the connection point side and measuring the response. A solid line illustrated in FIG. 6 is calculation data on the sound in the cab when the displacement input has been given to the tire ground plane in order to reproduce the phenomena when running and a thin line is data on the simulation result illustrating the result which has been analyzed by the conventional method. The solid-line calculation data and the thin-line simulation result data are almost the same as each other and it is seen that the analysis of the conventional method is appropriately conducted.

FIG. 7 is a diagram illustrating a result of simulation by the transfer path analysis of the practical example and with the use of the complicated vehicle model. The method of the practical example illustrated in FIG. 7 is a method for reducing the man-hour by estimating the self-transfer function at the evaluation point, differently from the conventional method in that the response is measured by conducting inputting from the evaluation point side. The solid line illustrated in FIG. 7 is the measurement data which is the same as that of the solid line in FIG. 6 and the thin line is data on simulation result illustrating the result analyzed by the method of the practical example.

Since when comparing the thin line illustrated in FIG. 7 with the thin line illustrated in FIG, 6, it can be said that they are almost the same as each other, the transfer path analysis method in the present practical example makes it possible to conduct the analysis with a high accuracy which is the same as that of the conventional method while greatly reducing the separation man-hour and the measurement man-hour.

Next, the second test will be described. FIG. 8 is a diagram illustrating data on practical vehicle test for describing the comparison between sound pressures in a case where a part has been replaced with another one. The solid line illustrated in FIG. 8 indicates data on sound pressure measurement test at the evaluation point of an original automobile. The thin line illustrated in FIG. 8 indicates data on sound pressure measurement test at the evaluation point of an automobile which is different from the original one in suspension. As illustrated in FIG. 8, a difference occurs in the sound pressure, particularly at 60 to 100 Hz by changing the suspension.

FIG. 9 is a diagram illustrating simulation result data before and after part replacement using the transfer path analysis in the practical example for the automobile described in FIG. 8. The solid line illustrated in FIG. 9 is simulation result data that the transfer path analysis of the practical example has been performed on the original automobile and the thin line is simulation result data that the transfer path analysis of the practical example has been performed on the automobile which is different from the original one in suspension. As illustrated in FIG. 9, also in the analysis result, the difference in sound pressure occurs at 60 to 100 Hz which indicates a difference in part. Accordingly, appropriate detection becomes possible according to the transfer path analysis of the practical example also in regard to the difference in part.

As above, the information processing apparatus 10 in the first embodiment is capable of reducing the man-hour for separation into the partial structures and the man-hour for measurement of the transfer functions and estimating the appropriate transfer functions.

[Second Embodiment]

Next, an information processing apparatus in the second embodiment will be described. Since the configuration of the information processing apparatus in the second embodiment is the same as the configuration illustrated in FIG. 1, description thereof is omitted.

<Functions>

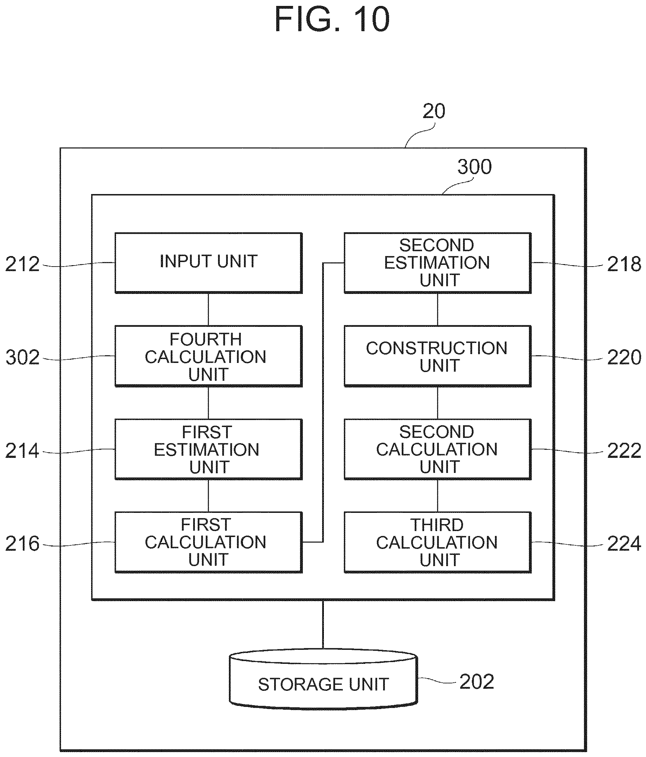

FIG. 10 is a block diagram illustrating one example of functions of an information processing apparatus 20 in the second embodiment. In the functions illustrated in FIG. 10, the same numerals which are the same as the numerals indicated in FIG. 2 are used for the ones which are the same as the functions illustrated in FIG. 2. The information processing apparatus 20 illustrated in FIG. 10 is equipped with an arithmetic operation unit 300 and the storage unit 202. The arithmetic operation unit 300 is equipped with at least the input unit 212, a fourth calculation unit 302, the first estimation unit 214, the first calculation unit 216, the second estimation unit 218, the construction unit 220, the second calculation unit 222 and the third calculation unit 224.

The fourth calculation unit 302 acquires the first self-transfer function and each first transfer function from the input unit 212. The fourth calculation unit 302 performs development of formula used in a general mode analysis for a frequency response function at the connection point on the vector space based on the transfer function between the connection point and the evaluation point.

Here, in the following formulae, the parameter in the first embodiment is changed. The parameter k used in the first embodiment is changed to w and the parameter k is used as another subscript. At this time, the formula (3) obtained in the first embodiment is expressed by a formula (21).

[Numerical Formula 21]

$$[G(\omega)]_{mn} = \begin{bmatrix} \{h(\omega)\}_{e_1 e_1} & \{h(\omega)\}_{e_1 e_2} & \cdots \\ \{h(\omega)\}_{e_2 e_1} & \{h(\omega)\}_{e_2 e_2} & \cdots \\ \vdots & \vdots & \ddots \end{bmatrix} \qquad \cdots(21)$$

The fourth calculation unit 302 develops the frequency response function by a formula (22) by using the mode analysis.

[Numerical Formula 22]

$$\{h(\omega)\}_{ee} = \sum_{k=1}^{n} \left[ \frac{\{\varphi_k\}\{\xi_k\}^T}{\sigma_k + j(\omega - \omega_{dk})} + \frac{\{\varphi_k^*\}\{\xi_k^*\}^T}{\sigma_k + j(\omega + \omega_{dk})} \right] + \sum_r [Z_r](j\omega)^r$$

$$\cdots(22)$$

It is possible to express the frequency response function on the left side of the formula (22) by addition of a formula which has been expressed with a k-th modal coordinate system variable as in the right-side first term and a remainder function in the right side second term.

k is a mode number
$\omega_{dk}$ is a damped natural frequency
$\xi_k$ is a stimulus coefficient
$\{\phi_k\}$ is a mode shape
$[Z_r]$ is a remainder term

The fourth calculation unit 302 deals with the remainder function term in the right side second term of the formula (22) in the same way as superposition of the frequency responses of the respective modal coordinate systems in the right side first term and conducts superposition of the frequency response functions expressed in the respective terms. Thereby, it becomes possible to express the frequency response function by a formula (23). The following formulae are all developed on the premise of the frequency response function in the formula (23).
[Numerical Formula 23]

$$\{h(\omega)\}_{ee} = \sum_{k=1}^{n+r} \{h_k(\omega)\}_{ee}$$

$$\cdots(23)$$

In the following, in association with use of the formula (23), the numerical formulae of the first embodiment are changed to formulae expressed by adding the subscript k to each frequency response h. Incidentally, the formula (23) is a formula that the frequency response has been expressed by superposition of single-degree-of freedom frequency responses.
The first estimation unit 214 calculates each second self-transfer function at each connection point on the vector space based on the transfer function between the connection point and the evaluation point by using the following formulae on the basis of the frequency response function, similarly to that in the first embodiment.
[Numerical Formula 24]

$$\sum_{k=1}^{n} \{h_k(\omega)\}_{ei} = \sum_{k=1}^{n} \left( \{\phi_k^i(\omega)\}_e \cdot \{\phi_k^i(\omega)\}_i \right)$$

$$\cdots(24)$$

[Numerical Formula 25]

$$\sum_{k=1}^{n} \{h_k(\omega)\}_{ii} = \sum_{k=1}^{n} \left( \{\phi_k^i(\omega)\}_i \cdot \{\phi_k^i(\omega)\}_i \right)$$

$$\cdots(25)$$

[Numerical Formula 26]

$$\sum_{k=1}^{n} \{h_k^i(\omega)\}_{ee} = \sum_{k=1}^{n} (\{h_k(\omega)\}_{ei} \cdot \{h_k(\omega)\}_{ei} / \{h_k(\omega)\}_{ii})$$

$$\cdots(26)$$

$$= \sum_{k=1}^{n} (\{\phi_k^i(\omega)\}_e \cdot \{\phi_k^i(\omega)\}_e)$$

[Numerical Formula 27]

$$\{h_k^i(\omega)\}_{ei} = \{A_k^i(\omega)\}_{ei} \cdot \exp(j(\{\theta_k^i(\omega)\}_{ei} \cdot \pi/180)) \quad\cdots(27)$$

[Numerical Formula 28]

$$\{h_k^i(\omega)\}_{ii} = \{A_k^i(\omega)\}_{ii} \cdot \exp(j(\{\theta_k^i(\omega)\}_{ii} \cdot \pi/180)) \quad\cdots(28)$$

[Numerical Formula 29]

$$\{h_k^i(\omega)\}_{ee} = \{A_k^i(\omega)\}_{ee} \cdot \exp(j(\{\theta_k^i(\omega)\}_{ee} \cdot \pi/180)) \quad\cdots(29)$$

[Numerical Formula 30]

$$\{A_k^i(\omega)\}_{ee} = \{A_k^i(\omega)\}_{ei} \cdot \{A_k^i(\omega)\}_{ei} / \{A_k^i(\omega)\}_{ii} \quad\cdots(30)$$

[Numerical Formula 31]

$$\{\theta_k^i(\omega)\}_{ee} = \{\theta_k^i(\omega)\}_{ei} + \{\theta_k^i(\omega)\}_{ei} - \{\theta_k^i(\omega)\}_{ii} \quad\cdots(31)$$

Next, the first calculation unit 216 calculates the element vector of each connection point by using the following formulae in the same way as that in the first embodiment.
[Numerical Formula 32]

$$\{\phi_k^i(\omega)\}_e = \{A_k^i(\omega)\}_e \cdot \exp(j(\{\theta_k^i(\omega)\}_e) \cdot \pi/180)) \quad\cdots(32)$$

[Numerical Formula 33]

$$\{A_k^i(\omega)\}_e = \sqrt{\{A_k^i(\omega)\}_{ee}} \quad\cdots(33)$$

[Numerical Formula 34]

$$\{\theta_k^i(\omega)\}_e = \frac{1}{2}\{\theta_k^i(\omega)\}_{ee} \qquad \cdots(34)$$

Next, the second estimation unit 218 estimates each second transfer function between the connection points by using the following formulae in the same way as that in the first embodiment.
[Numerical Formula 35]

$$\{h_k^i(\omega)\}_{ej} = \{\phi_k^i(\omega)\}_e \cdot \{\phi_k^i(\omega)\}_j \qquad \cdots(35)$$

[Numerical Formula 36]

$$\{A_k^i(\omega)\}_{ej} = \{A_k^i(\omega)\}_e \cdot \{A_k^i(\omega)\}_j \qquad \cdots(36)$$

[Numerical Formula 37]

$$\{\theta_k^i(\omega)\}_{ej} = \{\theta_k^i(\omega)\}_e + \{\theta_k^i(\omega)\}_j \qquad \cdots(37)$$

Next, the construction unit 220 constructs the transfer function at the connection point e of the response-side structure pp on the vector space [H] by using a formula (38) and by using the drive point functions $\{h^i\}_{ee}$ at all of the connection points e and the transfer functions $\{h^i\}_{ej}$ which have been estimated in the same way as that in the first embodiment.
[Numerical Formula 38]

$$[G^i]_{mn,k} = \begin{bmatrix} \{h^i\}_{e_1e_1} & \{h^i\}_{e_1e_2} & \cdots \\ \{h^i\}_{e_2e_1} & \{h^i\}_{e_2e_2} & \cdots \\ \vdots & \vdots & \ddots \end{bmatrix}_k \qquad \cdots(38)$$

Next, the second calculation unit 222 calculates the force generated at the connection point e of the response-side structure pp in the actual operation of a product such as the automobile and so forth by using a formula (39) in the same way as that in the first embodiment.
[Numerical Formula 39]

$$\{F^{i-op}(\omega)\}_n = [G^i(\omega)]_{mn}^{-1} \cdot \{\ddot{U}^{op}(\omega)\}_m \qquad \cdots(39)$$

The third calculation unit 224 calculates the contribution of the transfer path to the evaluation physical quantities (the sound $\{p_a\}_i$, the vibration $\{U^{op}\}_i$ and so forth) at the evaluation point i by summing the multiplied values by using a formula (40) in the same way as that in the first embodiment.
[Numerical Formula 40]

$$\{P_a(\omega)\}_i = [H(\omega)]_{in} \cdot \{F^{i-op}(\omega)\}_n \qquad \cdots(40)$$

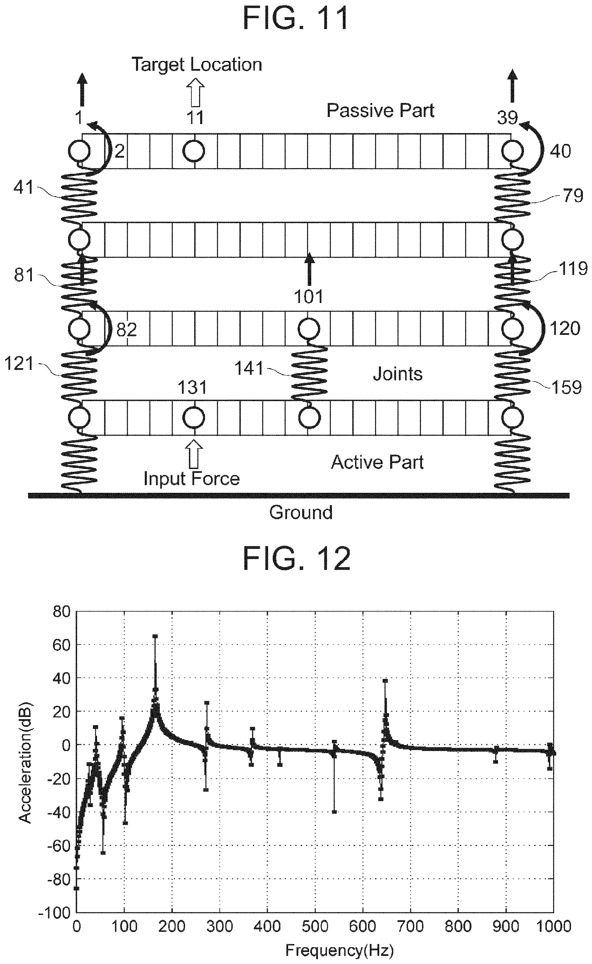

FIG. 11 is a diagram for describing a simple model to be used in the second embodiment. FIG. 11 illustrates the model which has been constructed in order to exhibit the effectiveness of the present method by comparing a transfer function which has been calculated in advance by a finite element method and the transfer function which has been estimated by using the present method in order to prove the accuracy of the present method.

In the model illustrated in FIG. 11, a two-dimensional beam model expression is used on the basis of the theory of the finite element method. In general, the two-dimensional beam model is, two translational and rotational degrees of freedom make a set and the one which couples together the respective sets of two degrees of freedom is called an element. The beam is configured by this element. In the example illustrated in FIG. 11, the element number is not described and only the number of the degree of freedom is described. An odd number indicates the translational degree of freedom and an even number indicates the rotational degree of freedom. The model illustrated in FIG. 11 is, the odd-numbered translational degrees of freedom at both ends of each beam are connected together by using a translational spring element. Incidentally, the "element" which is called here is different in concept from the "element vector" used in the formulae.

For example, FIG. 11 is a system model that the input-side structure (Active Part) which is configured by one beam model and two ground spring models, and the response-side structure (Passive Part) in which respective beams of three beam models have been connected together via the two translational spring elements at the degrees of freedom 1 and 41, 39 and 79, 41 and 81, 79 and 119 and which includes the evaluation point have been connected together via the three translational spring elements at the degrees of freedom 81 and 121, 101 and 141, 119 and 159 by using the finite element method. In the following, results of various tests by simulations that the model illustrated in FIG. 11 has been used will be described.

FIG. 12 is a diagram illustrating one example of a test result (a part 1) for evaluating the estimation accuracy of the drive point function in the second embodiment. The result illustrated in FIG. 12 illustrates a solid-line result that the drive point function which is at the degree of freedom 81 which is the connection point has been calculated directly by using the finite element method and a dotted-line (dots and a line formed with the dots) result that it has been estimated by the present method, by using a model of only the response-side structure in a case where connection springs of the input structure side and the response structure side are not linked together.

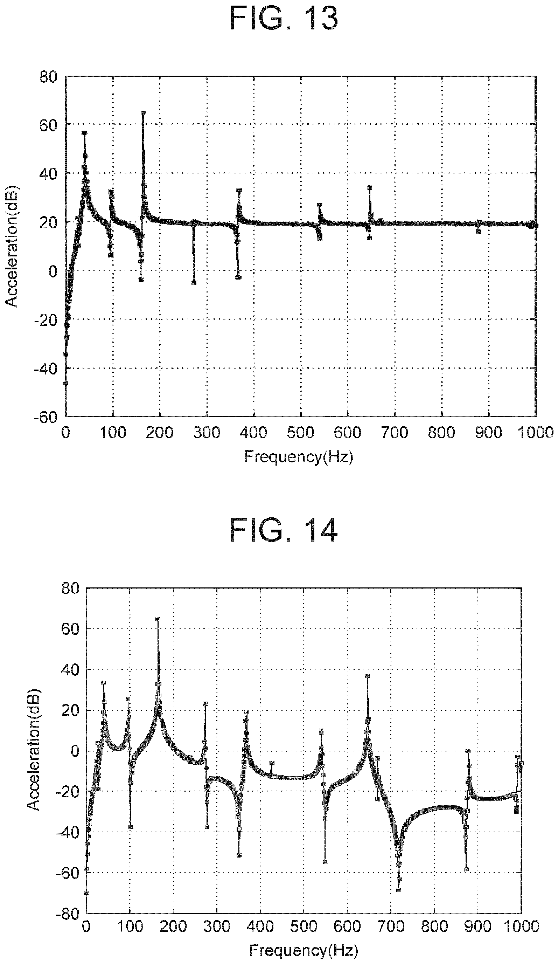

FIG. 13 is a diagram illustrating one example of a test result (a part 2) for evaluating the estimation accuracy of the drive point function in the second embodiment. The result illustrated in FIG. 13 illustrates the solid-line result that the drive point function which is at the degree of freedom 101 which is the connection point has been calculated directly by using the finite element method and the dotted-line result that it has been estimated by the present method, by using the model of only the response-side structure in the case where the connection springs of the input structure side and the response structure side are not linked together.

FIG. 14 is a diagram illustrating one example of a test result (a part 1) for evaluating the estimation accuracy of the transfer function in the second embodiment. The result illustrated in FIG. 14 illustrates the solid-line result that the transfer function which is at the degree of freedom 81 when the degree of freedom 101 has been excited has been calculated directly by using the finite element method and the dotted-line result that it is has been estimated by the present method, by using the model of only the response-side structure in the case where the connection springs of the input structure side and the response structure side are not linked together.

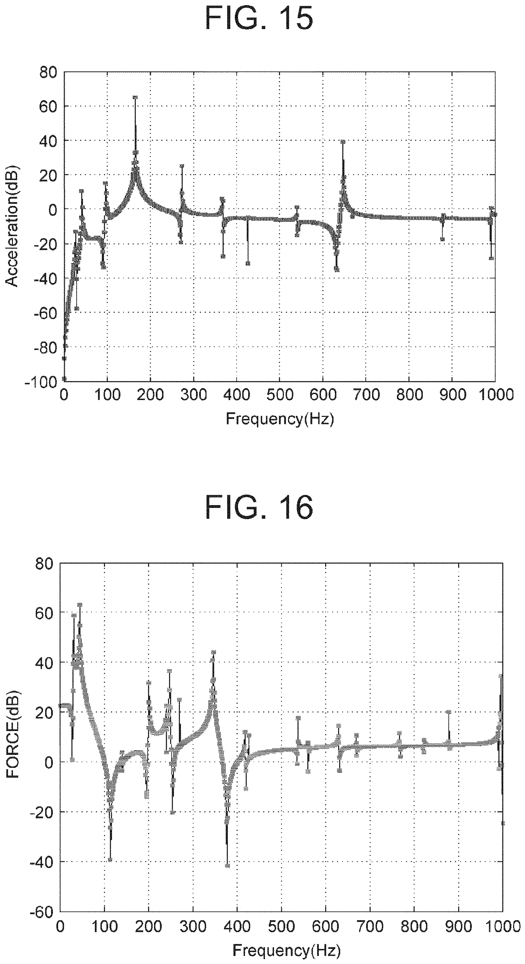

FIG. 15 is a diagram illustrating one example of a test result (a part 2) for evaluating the estimation accuracy of the transfer function in the second embodiment. The result illustrated in FIG. 15 illustrates the solid-line result that the transfer function which is at the degree of freedom 81 when the degree of freedom 119 has been excited has been calculated directly by using the finite element method and the dotted-line result that it has been estimated by the present method, by using the model of only the response-side structure in the case where the connection springs of the input structure side and the response structure side are not linked together.

As above, according to the results illustrated in FIGs. 12 to 15, the present method makes it possible to accurately estimate the drive point function and the transfer function at each degree of freedom.

FIG. 16 is a diagram illustrating one example of a test result for evaluating the estimation accuracy of the force generated at the degree of freedom 81 in the second embodiment. The result illustrated in FIG. 16 illustrates the solid-line result that the force generated at the degree of freedom 81 has been directly calculated by using the formula (2) of the conventional method and the dotted-line result that it has been estimated by using the formula (39).

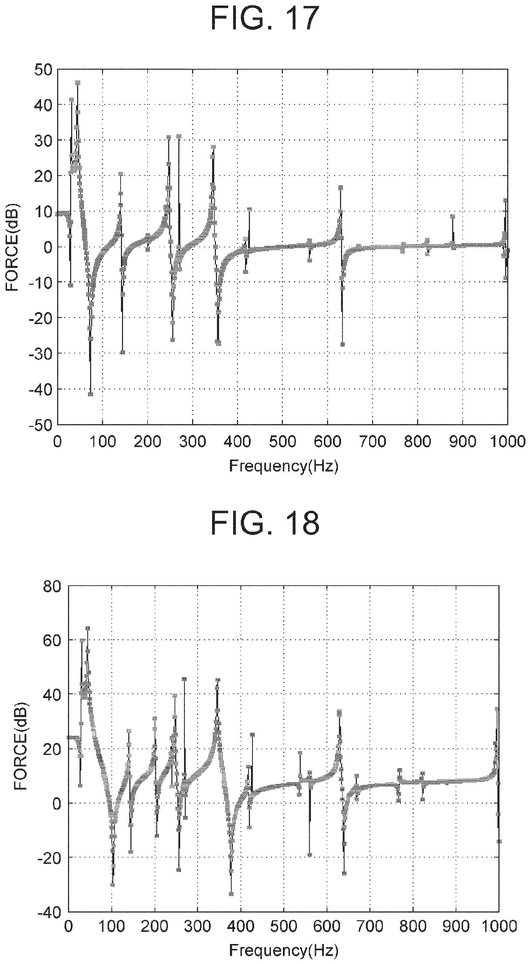

FIG.17 is a diagram illustrating one example of a test result for evaluating the estimation accuracy of the force generated at the degree of freedom 101 in the second embodiment. The result illustrated in FIG. 17 illustrates the solid-line result that the force generated at the degree of freedom 101 has been directly calculated by using the formula (2) of the conventional method and the dotted-line result that it has been estimated by using the formula (39).

FIG.18 is a diagram illustrating one example of a test result for evaluating the estimation accuracy of the force generated at the degree of freedom 119 in the second embodiment. The result illustrated in FIG. 18 illustrates the solid-line result that the force generated at the degree of freedom 119 has been directly calculated by using the formula (2) of the conventional method and the dotted-line result that it has been estimated by using the formula (39).

As above, according to the results illustrated in FIGs. 16 to 18, the present method makes it possible to accurately estimate the force generated at each degree of freedom.

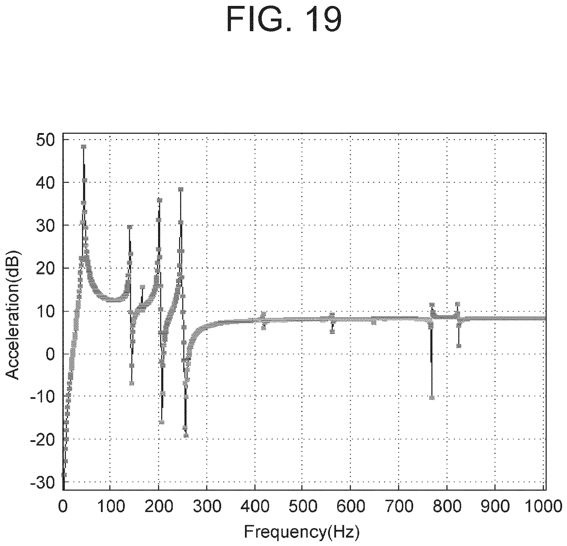

FIG. 19 is a diagram illustrating one example of a test result for evaluating the estimation accuracy of the evaluation physical quantity of the evaluation point in the second embodiment. The result illustrated in FIG. 19 illustrates the solid-line result that the vibration which becomes the evaluation physical quantity at the degree of freedom 11 which is the evaluation point has been calculated by using the formula (1) of the conventional method and the dotted-line result that it has been estimated by using the formula (40).

According to the result illustrated in FIG. 19, the present method makes it possible to accurately obtain the vibration which becomes the evaluation physical quantity at the evaluation point.

<Operation>

The operation of the information processing apparatus 20 in the second embodiment will be described. The operation of the information processing apparatus 20 in the second embodiment is, mode analysis processing by the fourth calculation unit 302 is inserted between steps S102 and S104 illustrated in FIG. 5. Processes which come after step S104 in the second embodiment are the same as the processes described in FIG. 5 except that the frequency response function which has been obtained by the mode analysis is developed.

As above, according to the second embodiment, it is possible to improve the estimation accuracy of the transfer functions and so forth by adding two (the formula (22) and the formula (23)) numerical formulae by the fourth calculation unit 302 to the first embodiment.

Incidentally, in regard to the program to be executed by the above-mentioned information processing apparatus, it is made such that as actual hardware, the CPU 102 reads the program out of the ROM 106 and executes it and thereby one or each of the plurality of units in the above-mentioned respective units is loaded on the RAM 104 and one or each of the plurality of units is generated on the RAM 104.

The processing described in the above-mentioned two embodiments may be also implemented as the program for making a computer execute it in this way. It is possible to implement the above-mentioned processing by installing this program from a server and so forth and making the computer execute it.

In addition, it is also possible to implement the above-mentioned processing by recording this program into the recording medium 116 and making the computer read the recording medium 116 into which this program has been recorded.

Incidentally, the recording medium 116 allows use of recording media of various types such as recording media for optically, electrically or magnetically recording information like a CD-ROM, a flexible disc, a magneto-optical disc and so forth, semiconductor memories and so forth for electrically recording the information like a ROM, a flash memory and so forth.

In addition, although in the above-mentioned example, the automobile has been described as the object, it is also possible to apply the transfer path analysis in the practical example to ships, the airplanes, buildings and so forth.

As above, although the two embodiments have been described, it is not limited to the above-mentioned embodiments and various alterations and modifications are possible other than the above-mentioned embodiments within a range described in the scope of patent claims.

Reference Signs List

10      information processing apparatus
102     CPU
104     RAM
106     ROM
212     input unit
214     first estimation unit
216     first calculation unit
218     second estimation unit
220     construction unit
222     second calculation unit
224     third calculation unit
302     fourth calculation unit

**Claims**

1. An information processing apparatus comprising:

an input unit which, when performing a transfer path analysis of an object, an input-side structure and a response-side structure which is connected with the input-side structure via one or more connection point(s) and includes an evaluation point being defined for the object, inputs a first self-transfer function which is acquired by measuring a response at the evaluation point to an input from the evaluation point and each first transfer function which is acquired by measuring a response between the respective connection points to the input;

a first estimation unit which estimates each second self-transfer function at each connection point on a vector space based on a transfer function between the connection point and the evaluation point by using the first self-transfer function and the each first transfer function;

a first calculation unit which calculates an element vector of each connection point for a self-transfer function which is defined as an inner product of an input-side element vector and an output-side element vector on the basis of each second self-transfer function which has been estimated by the first estimation unit;

a second estimation unit which estimates each second transfer function between the connection points on the vector space by using the element vector of the each connection point; and

a construction unit which constructs a third transfer function at each connection point of the response-side structure on the vector space by using the each second self-transfer function and the each second transfer function.

2. The information processing apparatus according to claim 1, wherein
the first estimation unit
performs estimation processing by using and substituting the Euler's formula for the first self-transfer function and the each first transfer function.

3. The information processing apparatus according to Claim 1 or 2, further comprising:

a second calculation unit which calculates a force generated at each connection point in operation on the vector space by using response data at each connection point of the response structure which has been measured in operation of the object and the third transfer function; and

a third calculation unit which obtains the sum total of multiplying the first transfer function at the each connection point by the force generated at the corresponding connection point and calculates contribution of the transfer path to an evaluation physical quantity at the evaluation point.

4. The information processing apparatus according to any one of claims 1 to 3, further comprising:

a fourth calculation unit which performs a mode analysis on a frequency response function at each connection point on the vector space based on the transfer function between the connection point and the evaluation point, based on the first self-transfer function and the each first transfer function which have been input into the input unit, wherein
the first estimation unit
estimates each second self-transfer function based on the frequency response function which has been subjected to the mode analysis by the fourth calculation unit.

5. An information processing method by which a computer executes:

when performing a transfer path analysis of an object, an input-side structure for the object and a response-side structure which is connected with the input-side structure via one or more connection point(s) and includes an evaluation point being defined, inputting a first self-transfer function which is acquired by measuring a response at the evaluation point to an input from the evaluation point and each first transfer function which is acquired by measuring a response at each connection point to the input;

estimating each second self-transfer function at each connection point on a vector space where the evaluation point is present by using the first self-transfer function and the each first transfer function;

calculating an element vector of each connection point by using the each second self-transfer function on the vector space;

estimating each second transfer function between all of the connection points on the vector space by using an element vector of the each connection point; and

constructing a third transfer function at each connection point of the response-side structure on the vector space by using the each second self-transfer function and the each second transfer function.

**6.** A program for making a computer execute the information processing method according to claim 5.

**7.** A computer readable recording medium in which the program according to claim 6 has been recorded.

# FIG. 1

10

102
CPU

104
RAM

106
ROM

108
DRIVE
DEVICE

110
NETWORK
I/F

112
INPUT
DEVICE

114
DISPLAY
DEVICE

116
RECORDING
MEDIUM

# FIG. 2

# FIG. 3

EP 3 163 270 A1

FIG. 4

# FIG. 5

START

INPUT $\{h\}_{ej}$, $\{h\}_{ii}$ —— S102

ESTIMATE
DRIVE POINT
FUNCTION $\{h^i\}_{ee}$ —— S104

CALCULATE
ELEMENT VECTOR $\{\Phi^i\}_e$ —— S106

CALCULATE
TRANSFER FUNCTION $\{h^i\}_{ej}$ —— S108

CALCULATE
TRANSFER FUNCTION $\{G^i\}_{ee}$ —— S110

END

# FIG. 6

# FIG. 7

## FIG. 8

## FIG. 9

# FIG. 10

# FIG. 11

# FIG. 12

## FIG. 13

## FIG. 14

# FIG. 15

# FIG. 16

# FIG. 17

# FIG. 18

# FIG. 19

## INTERNATIONAL SEARCH REPORT

| | International application No. |
|---|---|
| | PCT/JP2015/067051 |

**A. CLASSIFICATION OF SUBJECT MATTER**

*G01H17/00*(2006.01)i, *G01M99/00*(2011.01)i, *G06F17/17*(2006.01)i, *G06F17/50*(2006.01)i

According to International Patent Classification (IPC) or to both national classification and IPC

**B. FIELDS SEARCHED**

Minimum documentation searched (classification system followed by classification symbols)
G01H17/00, G01M13/00-13/04, G01M99/00, G06F17/17, G06F17/50

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2011-81543 A (Suzuki Motor Corp.), 21 April 2011 (21.04.2011), entire text; all drawings (Family: none) | 1-7 |
| A | JP 2010-230584 A (Mazda Motor Corp.), 14 October 2010 (14.10.2010), paragraphs [0042] to [0091]; fig. 5 to 12 & US 2010/0299107 A1 | 1-7 |

☐ Further documents are listed in the continuation of Box C.　　☐ See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 25 August 2015 (25.08.15) | 08 September 2015 (08.09.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GAJDATSY P. ; JANSENS K. ; DESMET W. ; VAN DER AUWERAER H.** *Application of the Transmissibility Concept in Transfer Path Analysis,* 2010